# EUROPEAN PATENT SPECIFICATION

(11) **EP 3 811 681 B1**
(45) Date of publication and mention of the grant of the patent: **09.11.2022**
(21) Application number: 19762808.4
(22) Date of filing: 06.09.2019
(51) Int. Cl.: H04W 48/12, H04W 16/04, H04W 16/14, H04W 72/04, H04W 72/12, H04W 56/00, H04W 88/06, H04W 88/10

(54) **METHOD FOR OPERATING LTE AND 5G COMMUNICATION SYSTEMS IN AN OVERLAPPING RADIO COVERAGE AREA**
VERFAHREN ZUM BETRIEB VON LTE- UND 5G-KOMMUNIKATIONSSYSTEMEN IN EINEM ÜBERLAPPENDEN FUNKABDECKUNGSBEREICH
PROCÉDÉ POUR FAIRE FONCTIONNER DES SYSTÈMES DE COMMUNICATION LTE ET 5G DANS UNE ZONE DE COUVERTURE RADIO SE CHEVAUCHANT

(30) Priority: 18.10.2018 EP 18201187
(43) Date of publication of application: 28.04.2021
(73) Proprietor: KONTRON TRANSPORTATION FRANCE SAS, 78066 St Quentin Yvelines Cedex (FR)
(72) Inventor: GRUET, Christophe, 78180 Montigny le Bretonneux (FR); TANE, Pierre, 91200 Boulogne-Billancourt (FR); JACQUES, Roger, 78320 Lévis Saint Nom (FR)
(74) Representative: Weiser & Voith Patentanwälte Partnerschaft
(86) International application number: PCT/EP2019/073839
(87) International publication number: WO 2020/078620

(56) References cited:
- US-A1- 2018 234 930
- LG ELECTRONICS: "Discussion on the Xn and enhanced X2 interface messages in NR-LTE coexistence", 3GPP DRAFT; R1-1713218 DISCUSSION ON THE XN AND ENHANCED X2 INTERFACE MESSAGES IN NR-LTE COEXISTENCE, 3RD GENERATION PARTNERSHIP PROJECT (3GPP), MOBILE COMPETENCE CENTRE ; 650, ROUTE DES LUCIOLES ; F- , vol. RAN WG1, no. Prague, Czech Republic; 20170821 - 20170825 20 August 2017 (2017-08-20), XP051316026, Retrieved from the Internet: URL:http://www.3gpp.org/ftp/Meetings_3GPP_ SYNC/RAN1/Docs/ [retrieved on 2017-08-20]
- SAMSUNG: "Co-existence of LTE and NR", 3GPP DRAFT; R1-164020 LTE-NR COEXISTENCE_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096918, Retrieved from the Internet: URL:http://www.3gpp.org/ftp/tsg_ran/WG1_RL 1/TSGR1_85/Docs/ [retrieved on 2016-05-13]
- ERICSSON: "Defining reserved resources in NR-SIB1", 3GPP DRAFT; R2-1809700 - DEFINING RESERVED RESOURCES IN NR-SIB1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 1 July 2018 (2018-07-01), XP051466967, Retrieved from the Internet: URL:http://www.3gpp.org/ftp/Meetings%5F3GP P%5FSYNC/RAN2/Docs [retrieved on 2018-07-01]
- "3rd Generation Partnership Project; Technical Specification Group Radio Access Network; Evolved Universal Terrestrial Radio Access (E-UTRA); Radio Resource Control (RRC); Protocol specification (Release 14)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.4.0, 26 September 2017 (2017-09-26), pages 1-753, XP051337336,
- HUAWEI ET AL: "Coexistence of NR DL and LTE", 3GPP DRAFT; R1-1703559 COEXISTENCE OF NR DL AND LTE_R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 15 February 2017 (2017-02-15), XP051222083, Retrieved from the Internet: URL:http://www.3gpp.org/ftp/tsg_ran/WG1_RL 1/TSGR1_88/Docs/ [retrieved on 2017-02-15]
- SAMSUNG: "RRC signalling to support LTE+NR Co-existence", 3GPP DRAFT; R2-1711819_NR CO-EXISTENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051343774, Retrieved from the Internet: URL:http://www.3gpp.org/ftp/Meetings_3GPP_ SYNC/RAN2/Docs/ [retrieved on 2017-10-08]
- SAMSUNG: "LTE-NR Coexistence", 3GPP DRAFT; R1-1613034 LTE-NR COEXISTENCE_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176960, Retrieved from the Internet: URL:http://www.3gpp.org/ftp/Meetings_3GPP_ SYNC/RAN1/Docs/ [retrieved on 2016-11-13]
- SAMSUNG: "Co-existence scenarios for LTE and NR", 3GPP DRAFT; R2-166501_NR CO-EXISTENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 9 October 2016 (2016-10-09), XP051151017, Retrieved from the Internet: URL:http://www.3gpp.org/ftp/Meetings_3GPP_ SYNC/RAN2/Docs/ [retrieved on 2016-10-09]
- QUALCOMM INCORPORATED: "NR-LTE Co-channel Coexistence Considerations", 3GPP DRAFT; R1-1705643 NR-LTE CO-CHANNEL COEXISTENCE CONSIDERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Spokane, US; 20170403 - 20170407 2 April 2017 (2017-04-02), XP051243765, Retrieved from the Internet: URL:http://www.3gpp.org/ftp/Meetings_3GPP_ SYNC/RAN1/Docs/ [retrieved on 2017-04-02]
- LG ELECTRONICS: "Discussion on NR-LTE coexistence for UL transmission", 3GPP DRAFT; R1-1704939 NR-LTE COEXISTENCE UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243073, Retrieved from the Internet: URL:http://www.3gpp.org/ftp/Meetings_3GPP_ SYNC/RAN1/Docs/ [retrieved on 2017-04-02]

## Description

The present invention relates to a method for operating a first communication system according to an LTE standard and a second communication system according to a 5G standard in a same radio coverage area.

A method according to the preamble of claim 1 is disclosed in "Co-existence scenarios for LTE and NR", 3GPP DRAFT; R2-166501_NR CO-EXISTENCE, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG2, no. Kaohsiung, Taiwan; October 10-14, 2016.

Traditional approaches when introducing a new wireless network technology such as 3GPP ("5G") alongside legacy wireless network technology such as LTE ("4G") involve deploying the new technology in a separate frequency band. However, some wireless network operators have either only a limited frequency band available or have user terminals which cannot support an additional frequency band for the new 5G technology. On the other hand, a complete replacement ("overnight switching") of LTE by 5G may not be feasible due to the slow transition of user terminals from LTE to 5G, so that a co-existence of both technologies may be required for an extended period of time.

There is thus a need for operating LTE and 5G communication systems in an overlapping radio coverage area with minimum bandwidth requirements.

To solve this problem, the invention provides for a method for operating a first communication system according to an LTE standard and a second communication system according to a 5G standard in a same radio coverage area,
to be used for communication between a user terminal and an eNB base station of the first communication system and between the same or another user terminal and a gNB base station of the second communication system,
wherein each of the eNB and gNB base stations communicates downlink data over a sequence of downlink radio frames and uplink data over a sequence of uplink radio frames, the downlink as well as the uplink radio frames each comprising a predetermined number of subframes,
wherein the eNB and gNB base stations are synchronized on a subframe level and use, at least for their downlink radio frames, overlapping frequency bands,
wherein, at least for the downlink radio frames, the eNB base station uses a first set of subframes for communication and the gNB base station uses a second set of subframes for communication, which first and second sets of subframes do not overlap during communication, and
wherein the sizes of the first and second sets are dynamically negotiated between the eNB and gNB base stations in response to a current or estimated data traffic volume over the eNB base station and the gNB base station, respectively,
which method is characterized in that
the eNB and gNB base stations use overlapping frequency bands for their uplink radio frames, and in that
the eNB and gNB base stations share coinciding subframes of their uplink radio frames for random-access transmissions received from user terminals.

In particular, the RACH area of the uplink frames can be shared among the two systems in this way.

With the method of the invention an LTE communication system and a 5G communication system can co-exist within the same frequency range, i.e. with same or overlapping frequency bands, without interference, as the resource grids in the frequency/time-plane are synchronized in subframe timings so that subframe usage can be split among the two systems. When the subframes coincide in starting times, unused subframes of the LTE system can be re-used as subframes by the 5G system. Legacy LTE user terminals and novel 5G user terminals can be serviced in the same geographical area within one and the same bandwidth a network operator has available.

In the invention, the numbers of subframes of the first and second sets of subframes that are allocated to the LTE system on the one hand and the 5G system on the other hand are dynamically negotiated between the eNB and gNB base stations in response to a current or estimated data traffic volume over the eNB base station and the gNB base station, respectively. The resource allocation of the subframes can thus be dynamically adjusted according to traffic needs in the overlapping radio coverage areas.

In a preferred embodiment which is particularly suited for current configurations of LTE systems, where each frame has a set of ten subframes, the eNB base station uses at least the 1st, 5th, 6th and 10th subframe in its downlink radio frames, and the gNB base station uses at least one of the remaining 2nd, 3rd, 4th, 7th, 8th and 9th eNB base station subframes in its downlink radio frames. The 1st, 5th, 6th and 10th subframe of the LTE resource grid usually contain indispensable LTE signalling channels such as PBCH, SIB-1, PSS/SSS, and PCH data. However, from the remaining subframes any or all can be allocated by the 5G system so that up to 60% of the available LTE resource grid can be used by the 5G system.

According to a further preferred feature of the invention, the eNB and gNB base stations are synchronized such that the 1st subframes of the downlink radio frames of the gNB base station coincide with the 2nd, 3rd, 4th, 7th, 8th or 9th subframes of the downlink radio frames of the eNB base station, as has been described, e.g., in US 2018/0234930 A1 for an LTE-NR coexistence scheme. This is particularly suited for current 5G communication systems in which many of the subframes can be used flexibly either for traffic channels or signalling with the exception of the 1st subframe which is required for 5G signalling data such as PBCH, SIB-1, PSS/SSS, and PCH data. Offsetting the grids of the LTE and 5G communication system with respect to each other ensures that the 5G system can allocate a subframe which corresponds to its 1st subframe, for common signalling purposes in the 5G system. Preferably, the eNB and gNB base stations are synchronized such that the 1st subframes of the downlink radio frames of the gNB base station coincide with the 2nd subframes of the downlink radio frames of the eNB base station, so that delay between the two communication systems is minimized.

In a further preferred embodiment of the invention the downlink subframe/s used by the gNB base station is/are indicated in a SysInfo broadcast by the eNB base station. This prevents LTE user terminals from looking for reference signals in subframes which are allocated to the 5G communication system, to avoid unnecessary processing in the user terminals. Preferably, said subframe/s is/are identified in the SysInfo as MBSFN subframes, so that they will be considered as reserved for MBMS (multimedia broadcast and multicast services) and not used for traffic and signalling transmissions in the LTE system.

The synchronisation of the LTE and 5G communication systems can be achieved in any known ways, e.g., by providing a direct or indirect connection between the eNB and gNB base stations so that the clock of one base station can be slaved to the clock of the other base station. In a preferred embodiment a common clock signal is fed to the eNB and gNB base stations for synchronizing, in particular via a precision time protocol such as, e.g., the IEEE 1588 standard. Preferably, the common clock signal is derived from a Global Navigation Satellite System (GNSS) clock so that the eNB and gNB base stations are synchronised to a common absolute reference clock with GNSS accuracy.

A further synergistic effect of sharing overlapping resource grids by the LTE and the 5G system can be achieved in that the subframes of downlink radio frames are split in frequency and time into resource blocks and the gNB base station uses at least one of those resource blocks of a subframe of the first set that are not used by the eNB base station for signalling. In this way, even more than 60% of the LTE resource grid can be re-used by the 5G system.

The invention will now be explained in more detail below on the basis of preferred exemplary embodiments thereof with reference to the accompanying drawings, in which:
Fig. 1 shows exemplary components of an LTE and a 5G communication system operated according to the method of the invention;
Fig. 2 shows an LTE downlink radio frame structure in the time/frequency-plane; and
Fig. 3 shows a downlink radio frame co-existence scheme for operating the LTE and 5G communication systems of Fig. 1 according to the invention.

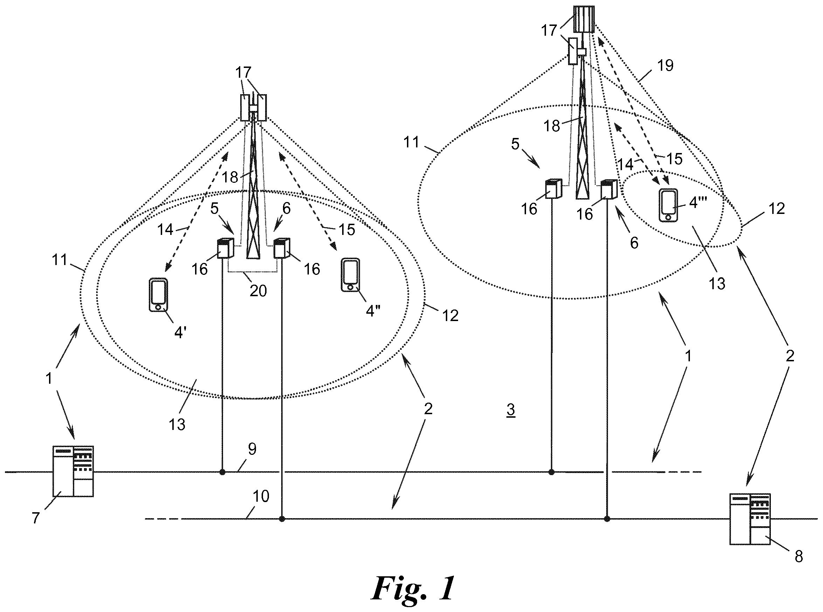

Fig. 1 shows a first communication system 1 and a second communication system 2 operating in the same geographical area 3 to communicate with mobile user terminals ("user entities", UE) 4', 4", 4‴. For each communication system 1, 2 two exemplary base stations 5 and 6, respectively, are shown, connected to core networks 7, 8 of the communication systems 1, 2 via data networks 9, 10. Each base station 5 of the first communication system 1 has a radio coverage area 11, and each base station 6 of the second communication system 2 has a radio coverage area 12.

The first communication system 1 operates according to an LTE (Long Term Evolution) standard ("4G") of the 3GPP consortium, whereas the second communication system 2 operates according to a 5G standard of the 3GPP consortium. The radio part of the 5G standard is defined in, e.g., 3GPP TS 38.211. The base stations 5 of an LTE communication system 1 are also called "eNodeB" base station or "eNB base stations", shortly "eNB", whereas the base stations 6 of a 5G communication system 2 are also called "gNB base stations" or shortly "gNB".

Due to the operation in the common geographical area 3, the radio coverage areas 11, 12 of two co-located or adjacent eNB and gNB base stations 5, 6 may overlap in overlap areas 13. In an overlap area 13, user terminals 4', 4ʺ, 4‴ may either communicate with an eNB base station 5 or a gNB base station 6 or both. Dedicated LTE user terminals 4' may be able to communicate only with eNB base station 5 (see arrows 14), dedicated 5G user terminals 4ʺ may be able to communicate only with gNB base stations 6 (see arrows 15), and dual LTE/5G user terminals 4‴ may be able to communicate with both an eNB and a gNB base stations 5, 6.

Each of the eNB and gNB base stations 5, 6 usually comprises a base station controller 16 and one or more antennas 17 mounted on a pole, mast, tower 18 etc. The antennas 17 of co-located base stations 5, 6 can share the same tower 18. The antennas 17 may be omni-directional or directional. In particular, antennas 17 of gNB base stations 6 can be antenna arrays for multiple directional coverage beams 19, as the "New Radio" (NR) specifications of the 3GPP 5G standard supports multi-beam diversity. The overlapping coverage area 13 can therefore also be the overlap area of the coverage area 12 of one of the beams 19 of an NR gNB base station 6 with the coverage area 12 of an eNB base station 5. The methods disclosed herein are thus also applicable to LTE and 5G cooperations within one of the beams 19 of gNB base stations 6 with NR.

To operate LTE and 5G communication systems 1, 2 in areas 13 of overlapping radio coverage, hitherto different frequency bands had been used by the LTE system 1 on the one hand and the 5G system 2 on the other hand. The cooperation methods disclosed in the following, however, now use the same - or at least overlapping - frequency bands for the LTE and the 5G system, respectively, in the "downlink" (base station to user terminal) and/or the "uplink" (user terminal to base station) direction of the communications 14, 15, for example, when only a limited bandwidth is available for the operation of the systems 1, 2 in the same area 3.

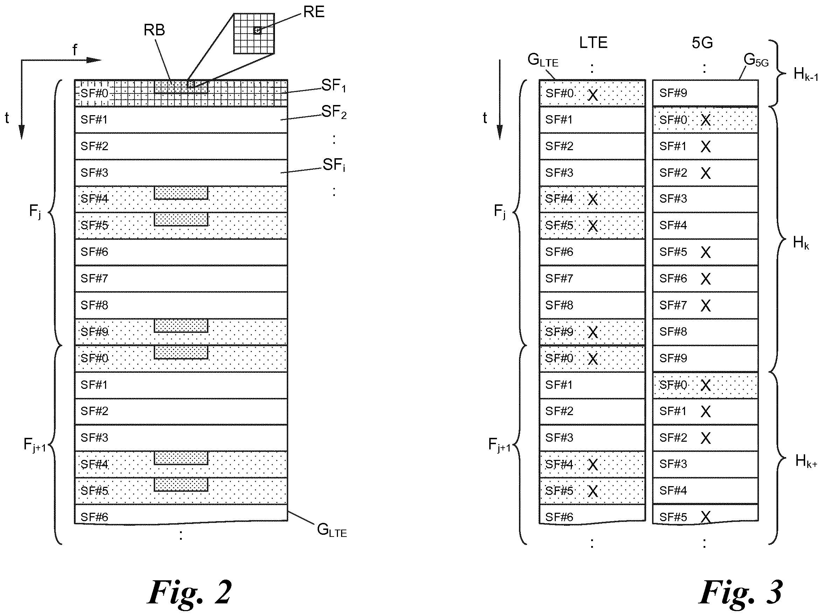

These methods exploit the specific structure of LTE communications 14 which are organised in a sequence of radio frames. Fig. 2 shows the LTE resource grid G_{LTE} of the LTE system 1 and the communications 14 in the time/frequency-plane t/f. The recource grid G_{LTE} consists of a number of resource blocks RB which each comprise a subgrid of resource elements RE. Each resource element RE in turn comprises a number of subcarriers (not shown) in the frequency dimension f and a number of OFDM symbols (not shown) in the time dimension t, representing downlink data to be communicated from an eNB base station 5 to a user terminal 4', 4ʺ, 4‴.

The resource blocks RB are grouped in subframes SF₁, SF₂, ..., generally SFᵢ. Several consecutive subframes SFᵢ, e.g., ten subframes SFᵢ designated SF#0, SF#1, ..., SF#9, make up each one of the downlink radio frames F₁, F₂, ..., generally Fⱼ, of a communication 14 in the downlink direction.

According to the LTE standard, at least some resource blocks RB of the first, fifth, sixth and tenth subframes SF#0, SF#4, SF#5 and SF#9 of each downlink radio frame Fⱼ are used for signalling purposes, e.g., to carry LTE common channels such as PBCH (physical broadcast channel), PSS (primary synchronization signal), SSS (secondary synchronization signal), PCH (paging channel), SIB-1 (system information block 1) etc.

The resource grid G_{5G} of the 5G system 2 and the communications 15 is very much the same as the resource grid G_{LTE} of the LTE system 1 shown in Fig. 2, however, in the downlink direction the location of the 5G signalling channels is flexible and not restricted to specific subframes SFᵢ of a 5G radio frame Hₖ (see Fig. 3). Rather, in the 5G system 2 any subframe SFᵢ can be used for downlink signalling, with one exception: The first subframe SF#0 - or the first and the fifth subframes SF#0, SF#4 in case of an SSB-PeriodicityServingCell-parameter of 5 ms - is/are used for 5G signalling in each frame Hₖ (or at least in every other, every fourth, eighth, etc. frame Hₖ when the SSB-PeriodicityServingCell-parameter is set to 20, 40, 80, etc ms).

As can be seen from the LTE downlink frame structure of Fig. 2, there are subframes SFᵢ which are non-essential for LTE signalling purposes such as (here) the subframes SF#1, SF#2, SF#3, SF#6, SF#7 and SF#8. These subframes would usually be allocated by an eNB base station 5 to carry downlink traffic data. As described in the following, these subframes can be allocated by a 5G gNB base station 6 to ensure cooperation in an overlapping coverage area 13.

Fig. 3 shows this in detail. The frames Fⱼ and subframes SFᵢ of the resource Grid G_{LTE} of an eNB base station 5 are shown over time t in the left half of Fig. 3, whereas the frames Hₖ and their subframes SFᵢ of the resource grid G_{5G} of a gNB base station 6 are shown over time t in the right of half Fig. 3. The subframes SFᵢ of the 5G frames Hₖ are comprised of resource blocks RB with resource elements RE as shown in Fig. 2.

Firstly, the resource grids G_{LTE} and G_{5G} of eNB and gNB base stations 5, 6 which share an overlapping coverage area 13 are synchronized on a subframe level, i.e., the starting points in time of the subframes SFᵢ of the frames Fⱼ of the respective eNB base station 5 are synchronized with the starting points in time of the subframes SFᵢ of the frames Hₖ of the respective gNB base station 6 in the area 13. For reasons detailed further down, the resource grid G_{5G} of the gNB base station 6 is, however, offset with respect to the resource grid G_{LTE} of the eNB base station 5 by one (or more) subframe durations so that the first subframes SF₁ (SF#0) of the 5G frames Hₖ coincide with the second, third, fourth, seventh, eight or ninth subframes SF₂, SF₃, SF₄, SF₇, SF₈, SF₉ (SF#1, SF#2, SF#3, SF#6, SF#7, SF#8) of the LTE frames Fⱼ.

The time synchronization of co-located or adjacent eNB and gNB base stations 5, 6 on a subframe level can be achieved by any technical means. For example, one of the eNB and gNB base stations 5, 6 can act as a master clock and the other one be slaved thereto, e.g., via a data connection 20 therebetween. Alternatively, the eNB and gNB base stations 5, 6 can be fed with a common clock signal, for example via a Precision Time Protocol (PTT) such as the standard IEEE 1588. The common clock signal can, e.g., be derived from a GNSS (Global Navigation Satellite System) clock, for example from a GPS timing signal. The common clock signal can, for example, be received in the core networks 7, 8 of the communication systems 1, 2 and transmitted via the data networks 9, 10 to the eNB and gNB base stations 5, 6.

Secondly, one or more of the non-signalling subframes SFᵢ of the LTE frames Fⱼ (here: one or more of the subframes SF#1, SF#2, SF#3, SF#6, SF#7 and SF#8) are used by the gNB base station 6 in the area of overlap 13 with the respective eNB base station 5, and the latter refrains from using this/these subframe/s itself. In this way, 10% to 60% of all subframes SFᵢ of the LTE frames Fⱼ can be used for 5G communications 15 in an area of overlap 13 with downlink resource grids G_{LTE}, G_{5G} overlapping each other within the same frequency range. And by offsetting the resource grid G_{5G} with respect to the resource grid G_{LTE} as described above, it can be ensured that the gNB base station 6 can use its first subframes SF#0 - or its subframes SF#0 and SF#5 - for 5G downlink signalling purposes, as these subframes do not collide with any subframes SFᵢ of the LTE resource grid G_{LTE} which are necessary for LTE downlink signalling purposes.

In the uplink direction, resource allocation between an eNB base station 5 and a gNB base station 6 can be chosen arbitrarily and flexibly as there are no signalling channels fixed to certain subframes SFᵢ of uplink data frames Fⱼ, Hₖ in either LTE or 5G. For increased re-use of resources an eNB base station 5 and a gNB base station 6 share coinciding subframes SFᵢ for so-called "random-access" transmissions from user terminals 4', 4ʺ, 4‴, i.e., for an (uplink) Random Access Channel (RACH), as it does not matter whether only LTE user terminals 4', 4‴, or only 5G user terminals 4ʺ, or 4‴, or both, collide in such a channel.

In the example shown in Fig. 3, the set of subframes SFᵢ used by an eNB base station 5 (marked with an "X" in the grid G_{LTE}) has a size of "4", whereas the set of subframes SFᵢ used by a gNB base station 6 (marked with an "X" in the grid G_{5G}) has a size of "6". The sizes of the subframe sets used by the eNB and gNB base stations 5, 6, respectively, are negotiated dynamically between an eNB base station 5 and a gNB base station 6 sharing the same overlap area 13 in response to a current or estimated data traffic volume of downlink data over the eNB base station 5 on the one hand and the gNB base station 6 on the other hand. In the uplink direction, the same applies mutatis mutandis; the preset or negotiated set sizes can also be different in the uplink and downlink direction. This dynamic negotiation can, e.g., be made over a dedicated data connection 20 between the co-located or adjacent eNB and gNB base stations 5, 6.

Optionally, the subframe/s SFᵢ used by a gNB base station 6 can be indicated in the SysInfo broadcast by the eNB base station 5 sharing the overlap area 13, to prevent LTE user terminals 4', 4‴ from looking for reference signals in those subframes. The indication in the SysInfo broadcast can, e.g., be made by designating such subframes SFᵢ as MBSFN (multimedia broadcast over a single frequency network) subframes so that they are ignored by LTE user terminals 4', 4‴.

Further optionally, if additional traffic volume capacity is needed in the 5G system 2, a gNB base station 6 could also be allocated some or even all of the resource blocks RB of one or more of the "signalling" subframes SFᵢ of the LTE system 1 (here: of the subframes SF#0, SF#4, SF#5, SF#9) which are not used for actual current signalling in those subframes, such as one or more of the resource blocks RB shown in light grey in Fig. 2 (the resource blocks RB shown in dark grey in Fig. 2 being used for actual signalling in the LTE downlink direction).

The invention is not restricted to the specific embodiments described in detail herein, but encompasses all variants, combinations and modifications thereof that fall within the framework of the appended claims.

## Claims

1. Method for operating a first communication system (1) according to an LTE standard and a second communication system (2) according to a 5G standard in a same radio coverage area (3),
to be used for communication (14, 15) between a user terminal (4', 4‴) and an eNB base station (5) of the first communication system (1) and between the same or another user terminal (4', 4‴) and a gNB base station (6) of the second communication system (2),
wherein each of the eNB and gNB base stations (5, 6) communicates downlink data over a sequence of downlink radio frames (Fⱼ, Hₖ) and uplink data over a sequence of uplink radio frames (Fⱼ, Hₖ), the downlink as well as the uplink radio frames (Fⱼ, Hₖ) each comprising a predetermined number of subframes (SFᵢ),
wherein the eNB and gNB base stations (5, 6) are synchronized on a subframe level and use, at least for their downlink radio frames (Fⱼ, Hₖ), overlapping frequency bands,
wherein, at least for the downlink radio frames (Fⱼ, Hₖ), the eNB base station (5) uses a first set of subframes (SFᵢ) for communication (14) and the gNB base station (6) uses a second set of subframes (SF₁) for communication (16), which first and second sets of subframes (SF₁) do not overlap during communication (14, 15), and
wherein the sizes of the first and second sets are dynamically negotiated between the eNB and gNB base stations (5, 6) in response to a current or estimated data traffic volume over the eNB base station (5) and the gNB base station (6), respectively,
**characterized in that**
the eNB and gNB base stations (5, 6) use overlapping frequency bands for their uplink radio frames (Fⱼ, Hₖ), and **in that**
the eNB and gNB base stations (5, 6) share coinciding subframes (SFᵢ) of their uplink radio frames (Fⱼ, Hₖ) for random-access transmissions received from user terminals (4', 4ʺ, 4‴).

2. Method according to claim 1, wherein each frame (Fⱼ, Hₖ) has a set of ten subframes (SFᵢ), **characterized in that**
the eNB base station (5) uses at least the 1st, 5th, 6th and 10th subframe (SFᵢ) in its downlink radio frames (Fⱼ), and
the gNB base station (6) uses at least one of the remaining 2nd, 3rd, 4th, 7th, 8th and 9th eNB base station subframes (SFᵢ) in its downlink radio frames (Hₖ).

3. Method according to claim 2, **characterized in that** the eNB and gNB base stations (5, 6) are synchronized such that the 1st subframes (SF₁) of the downlink radio frames (Hₖ) of the gNB base station (6) coincide with the 2nd, 3rd, 4th, 7th, 8th or 9th subframes (SF₁, SF₂, SF₃, SF₇, SF₈, SF₉) of the downlink radio frames (Fⱼ) of the eNB base station (5).

4. Method according to claim 3, **characterized in that** the eNB and gNB base stations (5, 6) are synchronized such that the 1st subframes (SF₁) of the downlink radio frames (Hₖ) of the gNB base station (6) coincide with the 2nd subframes (SF₂) of the downlink radio frames (Fⱼ) of the eNB base station (5).

5. Method according to any one of the claims 1 to 4, **characterized in that** the downlink subframe/s (SF₁) used by the gNB base station (6) is/are indicated in a SysInfo broadcast by the eNB base station (5).

6. Method according to claim 5, **characterized in that** said subframe/s (SF₁) is/are identified in the SysInfo as MBSFN subframes.

7. Method according to any one of the claims 1 to 6, **characterized in that** a common clock signal is fed to the eNB and gNB base stations (5, 6) for synchronizing.

8. Method according to claim 7, **characterized in that** the common clock signal is fed via a precision time protocol.

9. Method according to claim 7 or 8, **characterized in that** the common clock signal is derived from a Global Navigation Satellite System clock.

10. Method according to any one of the claims 1 to 9, **characterized in that** the subframes (SFᵢ) of downlink radio frames (Fⱼ, Hₖ) are split in frequency and time into resource blocks (RB) and the gNB base station (6) uses at least one of those resource blocks (RB) of a subframe (SFᵢ) of the first set that are not used by the eNB base station (5) for LTE signalling channels such as PBCH, SIB-1, PSS/SS and PCH data.

## Patentansprüche

1. Verfahren zum Betreiben eines ersten Kommunikationssystems (1) nach einem LTE-Standard und eines zweitens Kommunikationssystems (2) nach einem 5G-Standard in einem gleichen Funkabdeckungsbereich (3),
zur Verwendung zur Kommunikation (14, 15) zwischen einem Benutzerterminal (4', 4‴) und einer eNB-Basisstation (5) des ersten Kommunikationssystems (1) und zwischen demselben oder einem anderen Benutzerterminal (4', 4‴) und einer gNB-Basisstation (6) des zweiten Kommunikationssystems (2),
wobei jede der eNB- und gNB-Basisstationen (5, 6) Downlinkdaten über eine Folge von Downlink-Funkrahmen (Fⱼ, Hₖ) und Uplinkdaten über eine Folge von Uplink-Funkrahmen (Fⱼ, Hₖ) kommuniziert, wobei sowohl die Downlink- als auch die Uplink-Funkrahmen (Fⱼ, Hₖ) jeweils eine vorgegebene Anzahl an Subrahmen (SFᵢ) umfassen,
wobei die eNB- und gNB-Basisstationen (5, 6) auf einer Subrahmen-Ebene synchronisiert sind und zumindest für ihre Downlink-Funkrahmen (Fⱼ, Hₖ) überlappende Frequenzbänder verwenden,
wobei, zumindest für die Downlink-Funkrahmen (Fⱼ, Hₖ), die eNB-Basisstation (5) eine erste Menge von Subrahmen (SFᵢ) zur Kommunikation (14) verwendet und die gNB-Basisstation (6) eine zweite Menge von Subrahmen (SFᵢ) zur Kommunikation (15) verwendet, welche ersten und zweiten Mengen von Subrahmen (SFᵢ) während der Kommunikation (14, 15) nicht überlappen, und
wobei die Größen der ersten und zweiten Mengen zwischen den eNB- und gNB-Basisstationen (5, 6) als Antwort auf ein aktuelles oder geschätztes Datenverkehrsvolumen über die eNB-Basisstation (5) bzw. die gNB-Basisstation (6) dynamisch vereinbart sind,
**dadurch gekennzeichnet, dass**
die eNB und gNB-Basisstationen (5, 6) für ihre Uplink-Funkrahmen (Fⱼ, Hₖ) überlappende Frequenzbänder verwenden, und dass
die eNB und gNB-Basisstationen (5, 6) zusammenfallende Subrahmen (SFᵢ) ihrer Uplink-Funkrahmen (Fi, Hₖ) für von Benutzerterminals (4', 4ʺ, 4‴) empfangene Random-Access-Übertragungen teilen.

2. Verfahren nach Anspruch 1, wobei jeder Rahmen (Fⱼ, Hₖ) eine Menge von zehn Subrahmen (SFᵢ) hat, **dadurch gekennzeichnet, dass**
die eNB-Basisstation (5) zumindest den ersten, fünften, sechsten und zehnten Subrahmen (SFᵢ) in ihren Downlink-Funkrahmen (Fⱼ) verwendet, und
die gNB-Basisstation (6) zumindest einen der übrigen zweiten, dritten, vierten, siebten, achten und neunten Subrahmen (SFᵢ) der eNB-Basisstation in ihren Downlink-Funkrahmen (Hₖ) verwendet.

3. Verfahren nach Anspruch 2, **dadurch gekennzeichnet, dass** die eNB- und gNB-Basisstationen (5, 6) derart synchronisiert sind, dass die ersten Subrahmen (SF₁) der Downlink-Funkrahmen (Hₖ) der gNB-Basisstation (6) mit den zweiten, dritten, vierten, siebten, achten oder neunten Subrahmen (SF₁, SF₂, SF₃, SF₇, SF₈, SF₉) der Downlink-Funkrahmen (Fⱼ) der eNB-Basisstation (5) zusammenfallen.

4. Verfahren nach Anspruch 3, **dadurch gekennzeichnet, dass** die eNB- und gNB-Basisstationen (5, 6) derart synchronisiert sind, dass die ersten Subrahmen (SF₁) der Downlink-Funkrahmen (Hₖ) der gNB-Basisstation (6) mit den zweiten Subrahmen (SF₂) der Downlink-Funkrahmen (Fⱼ) der eNB-Basisstation (5) zusammenfallen.

5. Verfahren nach einem der Ansprüche 1 bis 4, **dadurch gekennzeichnet, dass** der/die von der gNB-Basisstation (6) verwendete/n Downlink-Subrahmen (SFᵢ) in einem SysInfo-Broadcast von der eNB-Basisstation (5) angegeben wird/werden.

6. Verfahren nach Anspruch 5, **dadurch gekennzeichnet, dass** der/die genannte/n Subrahmen (SFᵢ) in der SysInfo als MBSFN-Subrahmen identifiziert ist/sind.

7. Verfahren nach einem der Ansprüche 1 bis 6, **dadurch gekennzeichnet, dass** den eNB- und gNB-Basisstationen (5, 6) zum Synchronisieren ein gemeinsames Taktsignal zugeführt wird.

8. Verfahren nach Anspruch 7, **dadurch gekennzeichnet, dass** das gemeinsame Taktsignal über ein Precision Time Protocol zugeführt wird.

9. Verfahren nach Anspruch 7 oder 8, **dadurch gekennzeichnet, dass** das gemeinsame Taktsignal vom Systemtakt eines Global Navigation Satellite Systems abgeleitet wird.

10. Verfahren nach einem der Ansprüche 1 bis 9, **dadurch gekennzeichnet, dass** die Subrahmen (SFᵢ) der Downlink-Funkrahmen (Fⱼ, Hₖ) in der Frequenz und der Zeit in Ressourcenblöcke (RB) aufgeteilt sind und die gNB-Basisstation (6) zumindest einen jener Ressourcenblöcke (RB) eines Subrahmen (SFᵢ) der ersten Menge verwendet, die nicht von der eNB-Basisstation (5) für LTE-Signalkanäle wie PBCH, SIB-1, PSS/SS und PCH data verwendet werden.

## Revendications

1. Procédé d'exploitation d'un premier système de communication (1) selon une norme LTE et d'un deuxième système de communication (2) selon une norme 5G dans une même zone de couverture radio (3),
devant être utilisé pour la communication (14, 15) entre un terminal utilisateur (4', 4‴) et une station de base eNB (5) du premier système de communication (1) et entre le même ou un autre terminal utilisateur (4', 4‴) et une station de base gNB (6) du deuxième système de communication (2),
dans lequel chacune parmi les stations de base eNB et gNB (5, 6) communique des données en liaison descendante sur une séquence de trames radio en liaison descendante (Fⱼ, Hₖ) et des données en liaison montante sur une séquence de trames radio en liaison montante (Fⱼ, Hₖ), les trames radio en liaison descendante ainsi qu'en liaison montante (Fⱼ, Hₖ) comprenant chacune un nombre prédéterminé de sous-trames (SFᵢ),
dans lequel les stations de base eNB et gNB (5, 6) sont synchronisées sur un niveau de sous-trame et utilisent, au moins pour leurs trames radio en liaison descendante (Fⱼ, Hₖ), des bandes de fréquences se chevauchant,
dans lequel, au moins pour les trames radio en liaison descendantes (Fⱼ, Hₖ), la station de base eNB (5) utilise un premier ensemble de sous-trames (SFᵢ) pour la communication (14) et la station de base gNB (6) utilise un deuxième ensemble de sous-trames (SFᵢ) pour la communication (15), lesquels premier et deuxième ensembles de sous-trames (SFᵢ) ne se chevauchent pas durant la communication (14, 15), et
dans lequel les tailles des premier et deuxième ensembles sont négociées dynamiquement entre les stations de base eNB et gNB (5, 6) en réponse à un volume de trafic de données actuel ou estimé sur la station de base eNB (5) et la station de base gNB (6), respectivement,
**caractérisé en ce que**
les stations de base eNB et gNB (5, 6) utilisent des bandes de fréquences se chevauchant pour leurs trames radio en liaison montantes (Fⱼ, Hₖ), et **en ce que**
les stations de base eNB et gNB (5, 6) partagent des sous-trames (SFᵢ) coïncidentes parmi leurs trames radio en liaison montante (Fⱼ, Hₖ) pour des transmissions à accès aléatoire reçues à partir des terminaux utilisateurs (4', 4ʺ, 4‴).

2. Procédé selon la revendication 1, dans lequel chaque trame (Fⱼ, Hₖ) possède un ensemble de dix sous-trames (SFᵢ), **caractérisé en ce que**
la station de base eNB (5) utilise au moins les 1^{ère}, 5^{ième}, 6^{ième} et 10^{ième} sous-trames (SFᵢ) dans ses trames radio en liaison descendante (Fⱼ), et
la station de base gNB (6) utilise au moins une des 2^{ième}, 3^{ième}, 4^{ième}, 7^{ième}, 8^{ième} et 9^{ième} sous-trames (SFᵢ) restantes de la station de base eNB dans ses trames radio en liaison descendante (Hₖ) .

3. Procédé selon la revendication 2, **caractérisé en ce que** les stations de base eNB et gNB (5, 6) sont synchronisées de sorte que les 1^{ères} sous-trames (SFᵢ) des trames radio en liaison descendantes (Hₖ) de la station de base gNB (6) coïncident avec les 2^{ième}, 3^{ième}, 4^{ième}, 7^{ième}, 8^{ième} ou 9^{ième} sous-trames (SF₁, SF₂, SF₃, SF₄, SF₇, SF₈, SF₉) trames radio en liaison descendante (Fⱼ) de la station de base eNB (5).

4. Procédé selon la revendication 3, **caractérisé en ce que** les stations de base eNB et gNB (5, 6) sont synchronisées de sorte que les 1^{ères} sous-trames (SF₁) des trames radio en liaison descendantes (Hₖ) de la station de base gNB (6) coïncident avec les 2^{ièmes} sous-trames (SF₂) des trames radio en liaison descendante (Fⱼ) de la station de base eNB (5).

5. Procédé selon l'une quelconque des revendications 1 à 4, **caractérisé en ce que** la/les sous-trame/s en liaison descendante (SFᵢ) utilisée/s par la station de base gNB (6) est/sont indiquée/s dans une diffusion SysInfo par la station de base eNB (5).

6. Procédé selon la revendication 5, **caractérisé en ce que** ladite/lesdites sous-trame/s (SFᵢ) est/sont identifiée/s dans le SysInfo en tant que sous-trame/s MBSFN.

7. Procédé selon l'une quelconque des revendications 1 à 6, **caractérisé en ce qu'**un signal d'horloge commun est alimenté dans les stations de base eNB et gNB (5, 6) pour la synchronisation.

8. Procédé selon la revendication 7, **caractérisé en ce que** le signal d'horloge commun est alimenté via un protocole Precision Time.

9. Procédé selon la revendication 7 ou 8, **caractérisé en ce que** le signal d'horloge commun est dérivé d'une horloge de système de navigation globale par satellite.

10. Procédé selon l'une quelconque des revendications 1 à 9, **caractérisé en ce que** les sous-trames (SFᵢ) des trames radio en liaison descendante (Fⱼ, Hₖ) sont divisées en fréquence et en temps en blocs de ressources (RB) et la station de base gNB (6) utilise au moins un de ces blocs de ressources (RB) d'une sous-trame (SFᵢ) du premier ensemble qui ne sont pas utilisés par la station de base eNB (5) pour des canaux de signalisation LTE tels que PBCH, SIB-1, PSS/SS et PCH data.
